## Europäisches Patentamt
## European Patent Office
## Office européen des brevets

(19)

(11) Numéro de publication: **0 030 880**
**B1**

(12)
# FASCICULE DE BREVET EUROPEEN

(45) Date de publication du fascicule du brevet: **31.08.83**

(51) Int. Cl.³: **F 23 R 3/28**

(21) Numéro de dépôt: **80401681.4**

(22) Date de dépôt: **25.11.80**

(54) Dispositif d'injection pour chambre à combustion de moteur à turbine.

(30) Priorité: **13.12.79 FR 7930553**

(43) Date de publication de la demande:
**24.06.81 Bulletin 81/25**

(45) Mention de la délivrance du brevet:
**31.08.83 Bulletin 83/35**

(84) Etats contractants désignés:
**DE FR GB IT SE**

(56) Documents cités:
**WO - A - 80/00593**
**CH - A - 262 382**
**FR - A - 1 092 279**
**FR - A - 1 186 524**
**FR - A - 1 380 744**
**FR - A - 1 535 882**
**FR - A - 2 193 141**
**FR - A - 2 259 989**
**FR - A - 2 336 556**
**FR - A - 2 383 319**
**GB - A - 648 699**
**GB - A - 2 038 473**
**US - A - 3 662 959**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Jourdain, Gérard Ernest André**
**4 Résidence l'Arcadie Saintry sur Seine**
**F-91100 Corbeil Essonnes (FR)**
Inventeur: **Soligny, Marcel Robert**
**136, Boulevard Jean Mermoz**
**F-94150 Chevilly-Larue (FR)**

(74) Mandataire: **Moinat, François et al,**
**S.N.E.C.M.A. Service des Brevets Boîte Postale 81**
**F-91003 Evry Cedex (FR)**

Courier Press, Leamington Spa, England.

EP 0 030 880 B1

Dispositif d'injection pour chambre à combustion de moteur à turbine

L'invention concerne un dispositif d'injection pour chambre à combustion de moteur à turbine et en particulier un dispositif reliant la rampe d'alimentation en carburant à la tête d'injection.

L'évolution des performances des moteurs modernes repose en grande partie sur une augmentation du taux de compression et de la température avant la turbine.

Il en découle certains impératifs au niveau de la chambre de combustion et en particulier pour le positionnement de la tête d'injection sur le fond de la chambre. Le positionnement doit être relativement précis afin d'obtenir une pulvérisation homogène de carburant à l'intérieur de la chambre et une combustion régulière. La tête d'injection devra donc accompagner la chambre dans ses déplacements d'origines thermiques et méchaniques.

Le brevet français 2 193 141 propose une solution consistant à fixer la tête d'injection sur la chambre de combustion et à amener le carburant par une tuyauterie dont l'extrémité, portant la buse, débouche dans l'axe de la tête, sans contact avec celle-ci. La tuyauterie est maintenue seulement par une fixation sur le carter de chambre. Ce dispositif, s'il est bien adapté aux moteurs de la génération précédente, ne convient pas aux nouveaux moteurs, tels que précédemment définis, dans lesquels la distance rampe d'alimentation-chambre de combustion est grande et ne permettrait pas un maintien suffisamment rigide de la tuyauterie d'alimentation.

Le brevet français 1 535 882 décrit un dispositif dans lequel la tuyauterie d'alimentation est maintenue aux deux extrémités: sur la chambre de combustion et dans le carter externe. Les axes de la chambre et de la tuyauterie sont confondus, ce qui permet de négliger les dilatations radiales et de n'avoir à corriger que les dilatations longitudinales. La tuyauterie d'alimentation est formée d'éléments tubulaires coaxiaux dans lesquels circulent le combustible liquide et le combustible gazeux. Les différences de dilatation longitudinale entre la tuyauterie et la chambre sont compensées par un dispositif à portée sphérique prévu entre la tuyauterie et la chambre permettant leur déplacement relatif.

On connait enfin par le brevet FR 1 092 279 un dispositif d'injection dans lequel le tube d'alimentation en carburant disposé radialement est maintenu à une extrémité par un raccord dans le carter externe, un tube coaxial au conduit d'alimentation entourant le tube d'alimentation en carburant. Dans cette disposition toutefois, le tube d'alimentation est monté libre à l'intérieur du tube coaxial formant conduit d'air de refroidissement, aucun moyen de guidage n'est prévu entre le premier et le deuxième tube et la solution au problème du passage étanche du premier tube dans le carter n'est pas enseignée.

L'invention concerne un dispositif du genre ci-dessus décrit, traversant radialement le carter pour relier la rampe d'alimentation en carburant, disposée à l'extérieur du carter moteur, à la tête d'injection maintenue sur la chambre de combustion. Le dispositif est conçu de manière à limiter les dilatations du tube d'alimentation afin que la position de la tête d'injection ne soit pas sensiblement modifiée lors des variations de régime. Ce résultat est atteint par la mise en oeuvre d'un dispositif constitué d'un premier tube relié à la rampe d'alimentation et amenant le carburant à la tête d'injection, d'un deuxième tube approximativement coaxial au premier tube et entourant celui-ci approximativement dans la partie comprise entre le carter et la tête d'injection, une des extrémités du deuxième tube étant fixée au carter, lesdits tubes étant disposés radialement dans le carter, caractérisé en ce qu'il comporte des moyens de guidage disposés entre le premier et le deuxième tube respectivement à l'extrémité libre du deuxième tube et au voisinage de la fixation du deuxième tube sur le carter, le premier moyen étant constitué par des portées cylindriques respectivement sur le premier tube et le deuxième tube, le deuxième moyen en forme de coupelle, entourant et fixé sur le premier tube, étant relié à l'extrémité d'un manchon à paroi élastique ondulée assurant le passage étanche du premier tube dans le carter, et au moins une tête d'injection formant l'extrémité libre du premier tube et coopérant avec une coupelle solidaire de la chambre de combustion par une portée sphérique.

Les explications et figures données ci-après à titre d'exemple permettront de comprendre comment on peut réaliser l'invention.

La figure 1 est une vue en coupe d'un exemple de réalisation d'un dispositif d'injection selon l'invention.

La figure 2 est une vue en coupe d'une variante de réalisation d'un dispositif d'injection.

La figure 3 montre la répartition de dispositifs d'injection sur des chambres annulaires ou disposées en barillet.

La figure 4 montre un deuxième exemple de répartition de dispositifs alimentant deux têtes d'injection.

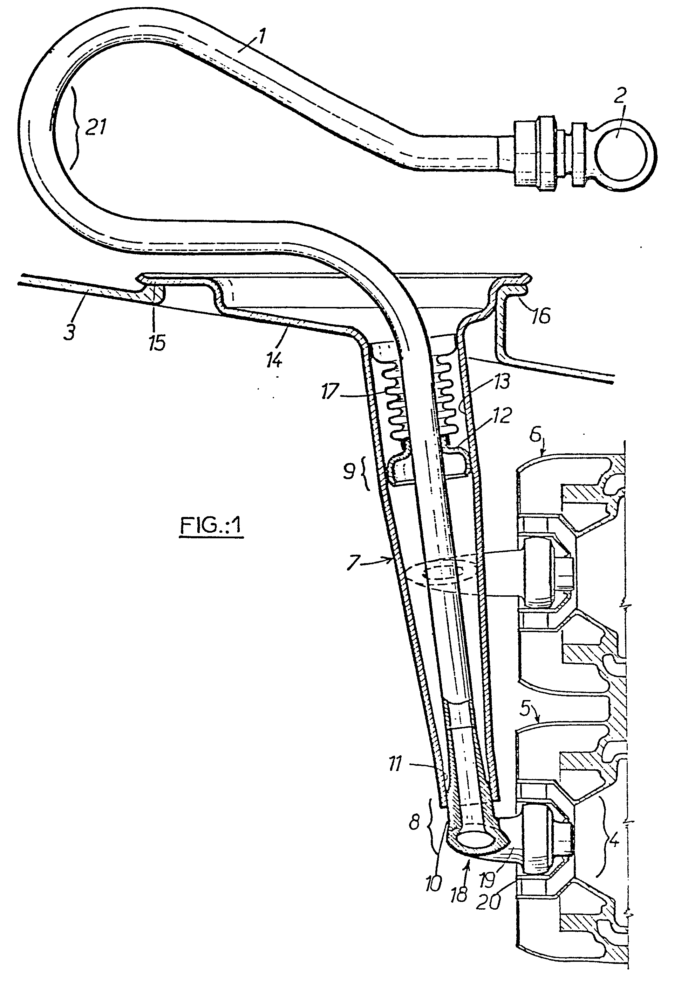

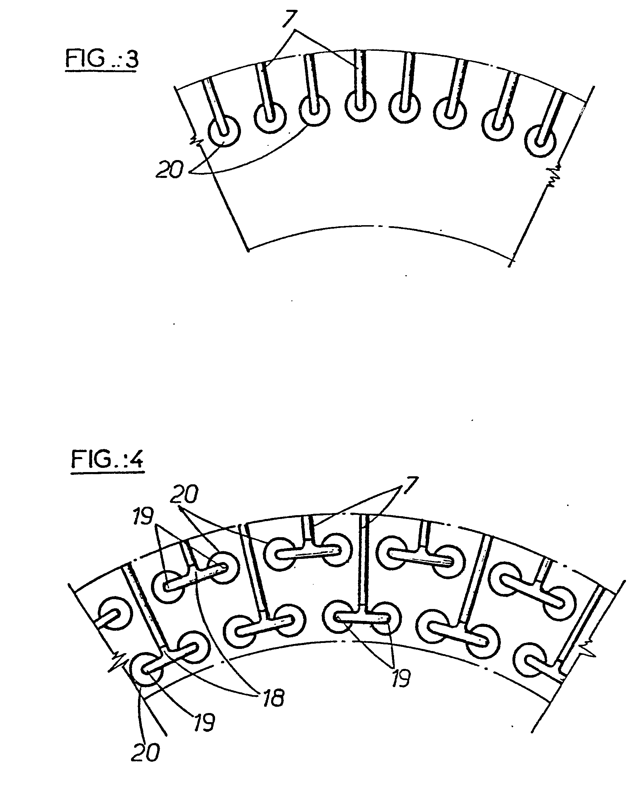

La figure 1 représente, vue en coupe, un exemple de réalisation d'un dispositif d'injection selon l'invention. Un premier tube 1 relie la rampe 2 d'alimentation en carburant, disposée à l'extérieur du carter moteur 3, à la tête d'injection 4 maintenue sur la chambre de combustion 5. Dans cette figure, on a représenté deux chambres ou parties de chambre 5 et 6 superposées correspondant à la disposition représentée figure 4 et utilisée par exemple pour des chambres devant être alimentées et fonctionner à des moments différents correspondant au moteur dans la phase de démarrage, ou dans la phase de régime.

Le tube 1 est entouré, de manière approximativement coaxiale par un deuxième tube 7. Ce tube 7 recouvre le tube d'alimentation 1 dans la partie comprise entre le carter 3 et la partie proche de la tête d'injection. Comme le montrent les figures 3 et 4, les tubes coaxiaux 1 et 7 sont disposés radialement dans le carter et sur le trajet de la veine d'air provenant des étages de compression situés en amont (non représentés). Ils sont par conséquent soumis aux forces aérodynamiques et aux températures relativement élevées de l'air comprimé et l'invention a pour objet de minimiser l'effet de cet environnement.

Afin de maintenir le positionnement entre les deux tubes 1 et 7, on a prévu des moyens de guidage constitués, dans l'exemple représenté, de deux éléments 8 et 9. Le premier élément 8 est disposé à l'extrémité libre du deuxième tube 7 et coopère avec l'extrémité du tube 1 proche de la tête d'injection 4. Cet élément 8 est formé par deux portées cylindriques coopérantes 10 et 11. La portée 10 est constituée par une bague ou un embout fixé à l'extrémité du tube 1 et la portée 11 est formée par alésage de l'extrémité du tube 7. Le deuxième élément 9, placé près de l'extrémité fixée à la paroi du carter 3 du tube 7, se présente sous la forme d'une coupelle 12 disposée dans le deuxième tube 7 et traversée par le premier tube 1. La partie centrale de la coupelle porte une ouverture circulaire dans laquelle est fixé le tube 1. Le bord de la coupelle, coopérant avec le tube 7, définit une partie cylindrique d'un diamètre tel qu'il permet le déplacement longitudinal par glissement de la coupelle 12 sur la partie intérieure cylindrique 13 du tube 7. Afin de permettre une meilleure rigidité du dispositif et plus particulièrement de la partie traversant le carter, le tube 7 présente dans sa partie proche du carter un diamètre plus important que celui de son extrémité proche de la tête d'injection. Selon la réalisation représentée, le tube 7 a une forme cylindro conique simple ou une forme conique terminée à chaque extrémité part une partie cylindrique.

Pour faciliter la fixation du tube 7 sur le carter, son extrémité coopérante a été formée en cuvette 14 dont le rebord 15 forme bride et vient se fixer sur une bride correspondante 16 prévue sur l'ouverture du carter par lequel passe le tube d'alimentation 1.

L'étanchéité entre l'extérieur du carter et la veine est assurée par un organe d'étanchéité 17 à soufflet. Cet organe est fixé entre le premier tube 1 et le deuxième tube 7. Selon la forme de réalisation représentée, il est constitué d'un manchon métallique à paroi ondulée élastique fixé par ses extrémités sur la périphérie interne du tube 7 et sur la coupelle 12 et plus particulièrement dans le voisinage de l'ouverture centrale dans laquelle passe et est fixé le tube 1.

Le tube 1 porte à son extrémité 18 une dérivation 19 dont les extrémités aboutissent dans des têtes d'injection 4 centrées dans des coupelles 20 solidaires des fonds de chambres 5. Chaque dispositif d'injection peut donc alimenter une ou plusieurs têtes (figures 3 et 4).

Chaque tête d'injection est maintenue dans la coupelle par l'intermédiaire de portées sphéro cylindriques permettant son déplacement axial. Afin de permettre le déplacement du premier tube 1 dans le deuxième tube 7, sans contraintes excessives, le tube 1 présente dans la zone comprise entre la rampe d'alimentation en carburant 2 et le carter moteur 3, une partie 21 courbée en épingle à cheveux, ou selon une forme similaire et donnant au tube une souplesse suffisante pour absorber les éventuels déplacements relatifs entre la tête d'injecteur 4 et la rampe 2.

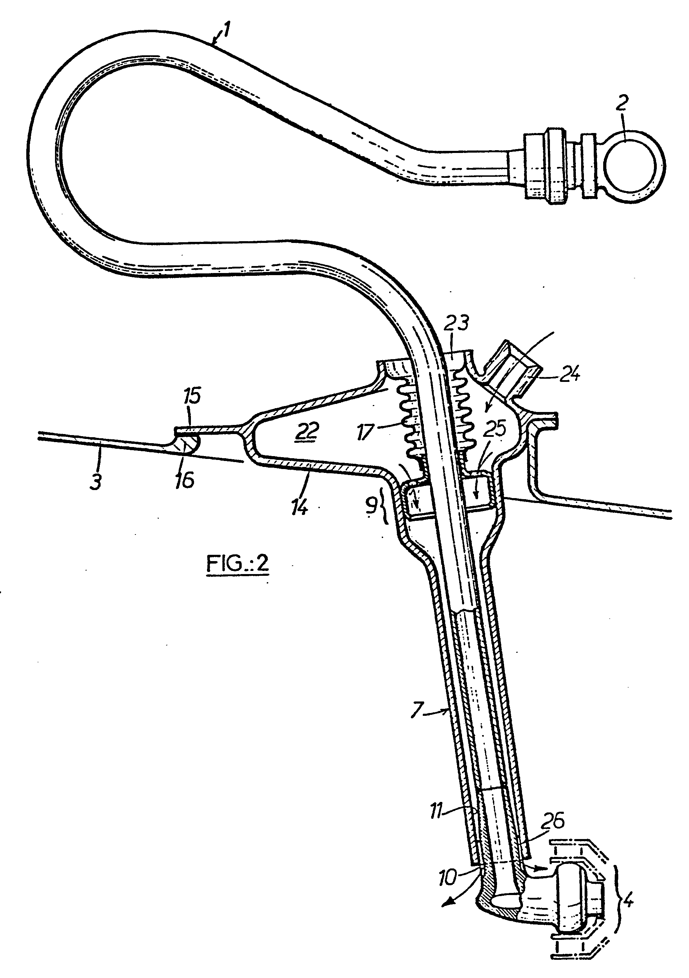

La figure 2 est un autre exemple de réalisation d'un dispositif d'injection conforme à l'invention.

Les éléments semblables à ceux de la figure 1 portent les mêmes références.

L'extrémité du deuxième tube 7, fixée au carter par les brides 15 et 16, définit une chambre 22, dans laquelle sont prévus deux passages 23 et 24. Le tube d'amenée de carburant 1 traverse la chambre par le premier passage 23, l'organe d'étanchéité 17 étant fixé par une de ses extrémités sur le bord du passage 23 et par son autre extrémité sur le tube 1 par l'intermédiaire de la coupelle 9. Le deuxième passage 24 sert à l'entrée d'un fluide de refroidissement généralement de l'air pris à l'extérieur destiné à maintenir à une température suffisamment basse le tube d'alimentation et éviter un échauffement excessif du carburant. Afin de permettre la libre circulation du fluide de refroidissement, les moyens de guidage, constitués par la coupelle 9 et les portées cylindriques d'extrémité de tube 10 et 11, sont munis de passages 25 et 26. Le fluide, introduit dans une région proche de la traversée du carter, s'échappe à l'extrémité du tube 7 dans la veine d'air provenant du compresseur.

Dans l'exemple de la figure 2, le tube 1 alimente une seule tête d'injection 4. La disposition des dispositifs dans le moteur peut prendre la configuration montrée à la figure 3.

Il est évident que le dispositif, décrit en regard de la figure 2, peut également recevoir un tube de dérivation 19 pour deux têtes. De tels dispositifs peuvent être alors disposés, comme montré sur la figure 4, selon une ou plusieurs couronnes concentriques.

Que l'on considère les dispositifs conforment à l'une ou l'autre réalisation et alimentant une ou plusieurs têtes, ils présentent de nombreux avantages communs, tels que:

—le maintien de la position relative des têtes d'injection dans la chambre de combustion, ce qui entraîne une augmentation du rendement du moteur, une suppression des points chauds, et éventuellement une diminution de l'épaisseur des parois de la chambre de combustion. Il en résulte un gain de masse et une simplification du refroidissement;

—l'échauffement limité du carburant par suite de la protection due au deuxième tube;

—la possibilité d'un circuit de refroidissement simple n'amenant pas d'augmentation de la complexité technologique.

Les dispositifs d'injection à plusieurs têtes présentent en outre d'autres avantages particuliers, tels que:

—le gain de masse et de prix par diminution des bossages, raccords, boulons de fixation, tubes d'alimentation;

—la diminution de l'encombrement par diminution du nombre de dispositifs d'injection. Ceci a pour conséquence une alimentation en air de la chambre de combustion plus homogène, d'où une augmentation du rendement et une diminution des "sillages chauds";

—la diminution du rapport surface d'échange en contact avec la veine-débit de carburant, d'où une diminution de l'échauffement du carburant et/ou une diminution du débit du fluide de refroidissement;

—l'entretien aisé dû à la réduction du nombre de pièces rendant les montages et démontages de la chambre de combustion plus rapides.

**Revendications**

1. Dispositif d'injection pour chambre à combustion de moteurs à turbine et en particulier dispositif reliant la rampe d'alimentation en carburant disposée à l'extérieur du carter moteur à la tête d'injection maintenue sur la chambre de combustion, ce dispositif étant constitué d'un premier tube (1) relié à la rampe d'alimentation (2) et amenant le carburant à la tête d'injection (4) et d'un deuxième tube (7) approximativement coaxial au premier tube (1) et entourant celui-ci approximativement dans la partie comprise entre le carter (3) et la tête d'injection (4) une des extrémités du deuxième tube (7) étant fixée au carter (3), lesdits tubes étant disposés radialement dans le carter, caractérisé en ce qu'il comporte des moyens de guidage (8, 9) disposés entre le premier et le deuxième tube respectivement à l'extrémité libre du deuxième tube et au voisinage de la fixation du deuxième tube sur le carter, le premier moyen (8) étant constitué par des portées cylindriques (10, 11) respectivement sur le premier tube (1) et le deuxième tube (7), le deuxième moyen (9) en forme de coupelle (12), entourant et fixé sur le premier tube (1), étant relié à l'extrémité d'un manchon à paroi élastique ondulée (17) assurant le passage étanche du premier tube dans le carter, et au moins une tête d'injection (4) formant l'extrémité libre du premier tube (1) et coopérant avec une coupelle (20) solidaire de la chambre de combustion (5) par une portée sphérique.

2. Dispositif selon la revendication 1, caractérisé en ce que l'extrémité du deuxième tube (7) fixée au carter définit une chambre présentant deux passages, un premier passage (23) pour le manchon à paroi élastique ondulée (17), un deuxième passage (24) pour l'amenée d'un fluide de refroidissement, les moyens de guidage (8, 9) comportant des passages (25, 26) pour le fluide de refroidissement.

3. Dispositif selon l'une des revendications précédentes, caractérisé en ce que le deuxième tube (7) comporte deux parties de diamètre différent, la partie de plus grand diamètre coopérant avec le deuxième élément (9) des moyens de guidage pour lui permettre un déplacement longitudinal.

4. Dispositif selon l'une des revendications précédentes, caractérisé en ce que les moyens de guidage (8, 9) sont disposés approximativement à chaque extrémité du second tube (7).

5. Dispositif selon l'une des revendications précédentes, caractérisé en ce que le premier tube (1) d'amenée de carburant présente, dans la zone comprise entre la rampe d'alimentation (2) et le carter (3) de moteur, une partie courbe (21) absorbant les mouvements relatifs entre la rampe d'alimentation (2) et le tête d'injection (4).

**Patentansprüche**

1. Injektor für eine Gasturbinenbrennkammer, insbesondere zur Verbindung der Kraftstoffsammelleitung, die ausserhalb des Motorgehäuses angeordnet ist, mit dem Düsenkopf, der auf der Brennkammer gehalten wird, welcher Injektor ein erstes Rohr (1) aufweist, das mit der Sammelleitung (2) verbunden ist und den Kraftstoff dem Düsenkopf (4) zuführt, und ein zweites Rohr (7), das zum ersten Rohr (1) annähernd gleichachsig ist und dieses etwa in dem Teil zwischen dem Gehäuse (3) und dem Düsenkopf (4) umgibt, wobei eines der Enden des zweiten Rohres (7) am Gehäuse (3) befestigt ist, welche Rohre im Gehäuse radial angeordnet sind, gekennzeichnet durch Führungselemente (8, 9), die zwischen dem ersten und dem zweiten Rohr am freien Ende des zweiten Rohres und in der Nähe der Befestigung des zweiten Rohres am Gehäuse angeordnet sind, welches erste Element (8) durch zylindrische Auflageflächen (10, 11) auf dem ersten Rohr (1) und dem zweiten Rohr (7) gebildet wird, während das zweite Element (9) in Form einer Schale (12), die das erste Rohr (1) umgibt und an diesem befestigt ist, mit dem Ende einer Muffe (17) mit einer elastischen gewellten Wand verbunden ist, die den dichten Eintritt des ersten Rohres in das Gehäuse gewährleistet, und mindestens einen Düsenkopf (4), der das freie Ende des ersten Rohres (1) bildet und mit einer Schale (20) zusammenwirkt, die mit der Brennkammer (5) durch eine sphärische Auflagefläche fest verbunden ist.

2. Injektor nach Anspruch 1, dadurch gekennzeichnet, daß das Ende des zweiten Rohres (7), das am Gehäuse befestigt ist, eine Kammer begrenzt, welche zwei Kanäle aufweist, einen ersten Kanal (23) für die Muffe (17) mit einer elastischen gewellten Wand, einen zweiten Kanal (24) für die Zufuhr eines Kühlmittels, während die Führungselemente (8, 9) Kanäle (25, 26) für das Kühlmittel aufweist.

3. Injektor nach einem der vorangehenden Ansprüche, dadurch gekennzeichnet, daß das zweite Rohr (7) zwei Teile von verschiedenem Durchmesser aufweist, wobei der Teil von größerem Durchmesser mit dem. zweiten Element (9) der Führungselemente zusammenwirkt, um ihm eine Längsbewegung zu ermöglichen.

4. Injektor nach einem der vorangehenden Ansprüche, dadurch gekennzeichnet, daß die Führungselemente (8, 9) in der Nähe jedes Endes des zweiten Rohres (7) angeordnet sind.

5. Injektor nach einem der vorangehenden Ansprüche, dadurch gekennzeichnet, daß das erste Kraftstoffzufuhrrohr (1) in der Zone zwischen der Sammelleitung (2) und dem Gehäuse (3) des Motors einen gekrümmten Teil (21) aufweist, welcher die relativen Bewegungen zwischen der Sammelleitung (2) und dem Düsenkopf (4) absorbiert.

**Claims**

1. Injection device for combustion chamber of turbine engines and in particular a device connecting the fuel supply manifold disposed externally of the engine casing to the injection head mounted on the combustion chamber, this device being constituted by a first tube (1) connected to the supply manifold (2) and conducting the fuel to the injection head (4) and by a second tube (7) approximately coaxial with the first tube (1) and surrounding the latter approximately over the part lying between the casing (3) and the injection head (4) one of the ends of the second tube (7) being secured to the casing (3), the said tubes being disposed radially within the casing, characterised in this that it comprises guide means (8, 9) disposed between the first and the second tube respectively at the free end of the second tube and in the vicinity of the securing point of the second tube on the casing, the first means (8) being constituted by cylindrical seatings (10, 11) respectively on the first tube (1) and the second tube (7), the second means (9) in the form of a cup-shaped member (12), surrounding and being secured on the first tube (1), being connected to the end of a sleeve with a corrugated resilient wall (17) providing for the fluid-tight passage of the first tube in the casing, and at least one injection head (4) forming the free end of the first tube (1) and cooperating with a cup-shaped member (20) rigid with the combustion chamber (5) through a spherical seating.

2. Device according to claim 1, characterised in this that the end of the second tube (7) secured to the casing defines a chamber having two passages, a first passage (23) for the sleeve with the corrugated elastic wall (17), a second passage (24) for the supply of a cooling fluid, the guide means (8, 9) comprising passages (25, 26) for the cooling fluid.

3. Device according to any of the preceding claims characterised in this that the second tube (7) comprises two parts of different diameter, the part of the larger diameter, cooperating with the second element (9) of the guide means enabling a longitudinal displacement thereof.

4. Device according to one of the preceding claims, characterised in this that the guide means (8, 9) are disposed substantially at each end of the second tube (7).

5. Device according to one of the preceding claims, characterised in this that the first tube (1) for the supply of the fuel has, in the zone lying between the supply manifold (2) and the casing (3) of the engine, a curved part (21) absorbing relative movements between the supply manifold (2) and the injection head (4).

0 030 880

FIG.:1

FIG.:2

FIG.:3

FIG.:4